# EUROPEAN PATENT APPLICATION

(11) **EP 4 794 006 A1**
(43) Date of publication of application: **19.08.2026**
(21) Application number: 26156323.3
(22) Date of filing: 04.02.2026
(51) Int. Cl.: H01M 4/13, H01M 4/133, H01M 4/36, H01M 4/48, H01M 4/587, H01M 4/62

(54) **ANODE FOR SECONDARY BATTERY AND LITHIUM SECONDARY BATTERY INCLUDING THE SAME**

(30) Priority: 05.02.2025 KR 20250014447; 03.02.2026 KR 20260021854
(71) Applicant: SK On Co., Ltd., Seoul 03161 (KR)
(72) Inventor: KIM, Hyeon A, 34124 Daejeon (KR); MOON, Gi Hyeon, 34124 Daejeon (KR); LEE, Jong Hyuk, 34124 Daejeon (KR)
(74) Representative: Stolmár & Partner Patentanwälte PartG mbB

(57) **Abstract**

An anode for a lithium secondary battery includes an anode current collector, and an anode active material layer formed on the anode current collector and including an anode active material, a binder and a nitrate. A concentration gradient of the binder in a thickness direction from a top surface of the anode current collector to a top surface of the anode active material layer is 0.1 wt%/µm or less. The concentration gradient of the binder is calculated from contents of a dye adsorbed to the binder measured at multiple points along a line in the thickness direction on a cross-section of the anode active material layer through an SEM-EDS and a thickness of the anode active material layer.

## Description

### BACKGROUND

### 1. Field

The present disclosure provides an anode for a lithium secondary battery and a lithium secondary battery. More particularly, the present disclosure provides an anode for a lithium secondary battery including a binder, and a lithium secondary battery including the same.

### 2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle.

For example, a secondary battery may include an electrode assembly including a cathode, an anode and a separator, and an electrolyte solution that may impregnate the electrode assembly. The lithium secondary battery may further include an outer case that accommodates the electrode assembly and the electrolyte solution. The secondary battery may be classified into a coin type, a prismatic type, a cylindrical type, or a pouch type secondary battery depending on a shape of a outer packaging material.

An electrode may include an electrode current collector and an electrode active material layer formed on the electrode current collector. A slurry including an electrode active material, a conductive material, a binder, or the like, may be coated on an electrode current collector, and the dried to form the electrode active material layer.

A binder migration that the binder moves to an upper portion of the electrode may occur during the drying process. Accordingly, a resistance of the electrode may increase, and charge/discharge properties of the secondary battery may be deteriorated.

Additionally, an adhesive force between electrode active materials in the electrode active material layer or between the electrode active material layer and the electrode current collector may be lowered, thereby deteriorating life-span properties of the secondary battery. When the binder content is increased to reduce the binder migration, the resistance of the electrode may increase due to an electrical insulation of the binder.

### SUMMARY

According to an aspect of the present disclosure, there is provided an anode for a lithium secondary battery having improved electrical and life-span properties.

According to an aspect of the present disclosure, there is provided a lithium secondary battery having improved electrical and life-span properties.

According to an aspect of the present disclosure, there is provided an anode for a lithium secondary battery having improved electrical and life-span properties.

An anode for a lithium secondary battery includes an anode current collector, and an anode active material layer formed on the anode current collector, the anode active material layer including an anode active material, a binder and a nitrate. A concentration gradient of the binder in a thickness direction from a top surface of the anode current collector to a top surface of the anode active material layer is 0.1 wt%/µm or less. The concentration gradient of the binder is calculated from contents of a dye adsorbed to the binder measured at multiple points along a line in the thickness direction on a cross-section of the anode active material layer through an SEM-EDS (scanning electron microscope-energy dispersive spectroscopy) analysis and a thickness of the anode active material layer.

In some embodiments, the concentration gradient of the binder may be calculated by a linear regression analysis from the contents of the dye adsorbed to the binder and the thickness of the anode active material layer.

In some embodiments, the concentration gradient of the binder may be in a range from 0.01 wt%/µm to 0.08 wt%/µm.

In some embodiments, the nitrate may be bonded to a surface of the anode active material.

In some embodiments, a content of the nitrate may be in a range from 0.03 wt% to 5.0 wt% based on a total weight of the anode active material and the nitrate.

In some embodiments, the nitrate may include an alkali metal nitrate.

In some embodiments, the anode active material may include at least one selected from the group consisting of a carbon-based active material and a silicon-based active material.

In some embodiments, the anode active material may include a carbon-based active material and a silicon-based active material, and a weight ratio of the silicon-based active material to the carbon-based active material is in a range from 0.1 to 1.0.

In some embodiments, the binder may include a rubber-based binder.

In some embodiments, a content of the rubber-based binder may be less than 5 wt% based on a total weight of the anode active material layer.

In some embodiments, the thickness of the anode active material layer may be in a range from 50 µm to 300 µm.

In some embodiments, an adhesion force of the anode active material layer to the anode current collector may be at least 0.15 N/cm.

A lithium secondary battery may include the above-described anode for a lithium secondary battery, and a cathode opposing the anode.

According to embodiments of the present disclosure as described above, an anode for a lithium secondary battery may have a concentration gradient of a binder in a predetermined range. Accordingly, a binding force at an inside of the anode active material layer and a binding force between the anode active material layer and the anode current collector may be improved. Thus, decrease in life-span properties of the lithium secondary battery may be prevented.

According to embodiments, the anode for a lithium secondary battery may include nitrate. Nitrate may reduce a fluidity of the binder to suppress a binder migration. Accordingly, an increase in resistance of the lithium secondary battery may be suppressed, and charge/discharge performance may be improved.

### BRIEF DESCRIPTION OF THE DRAWINGS

FIG. 1 is a schematic cross-sectional view illustrating an anode for a lithium secondary battery according to embodiments.
FIG. 2 and FIG. 3 are a schematic cross-sectional view and a schematic plan view of a lithium secondary battery, respectively, according to embodiments.
FIG. 4A is a graph of an anode for a lithium secondary battery according to embodiments analyzed by an SEM-EDS.
FIG. 4B is a graph of an anode for a lithium secondary battery according to Comparative Example analyzed by an SEM-EDS.

### DETAILED DESCRIPTION OF THE EMBODIMENTS

According to embodiments of the present disclosure, an anode for a lithium secondary battery (hereinafter, that may be as an anode) having improved electrical and life-span properties and a method for manufacturing the anode are provided. Additionally, according to embodiments of the present disclosure, a lithium secondary battery (hereinafter, that may be abbreviated as a secondary battery) including the anode for a lithium secondary battery is provided.

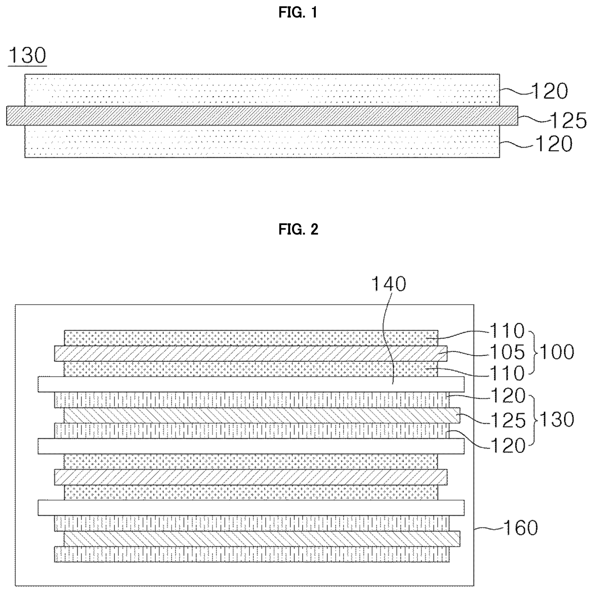

FIG. 1 is a schematic cross-sectional view illustrating an anode for a lithium secondary battery according to example embodiments.

Referring to FIG. 1, an anode 130 for a lithium secondary battery includes an anode current collector 125 and an anode active material layer 120.

For example, the anode current collector 125 may include copper, stainless steel, nickel, titanium, or an alloy thereof. In an embodiment, the anode current collector 125 may include copper or stainless steel surface-treated with carbon, nickel, titanium or silver.

The anode active material layer 120 may include an anode mixture containing an anode active material. For example, the anode mixture may be dispersed in a solvent to prepare an anode slurry. The anode slurry may be coated on the anode current collector 125, and then dried and pressed to form the anode active material layer 120.

The solvent may include water, pure water, deionized water, distilled water, ethanol, isopropanol, methanol, acetone, n-propanol, t-butanol, or the like.

The anode mixture may include the anode active material, a binder and a conductive material. In some embodiments, a total weight of the anode mixture may be substantially equal to a total weight of the anode active material layer 120. In some embodiments, a content of a component in the total weight of the anode mixture may be substantially equal to a content of a component in the total weight of the anode active material layer 120.

A material capable of adsorbing and desorbing lithium ions may be used as the anode active material. For example, the anode active material may include a carbon-based material such as crystalline carbon, amorphous carbon, a carbon composite or a carbon fiber; a lithium metal; a lithium alloy; a silicon (Si)-containing material, or a tin (Sn)-containing material.

The anode active material may include a carbon-based active material such as a graphite-based active material. For example, a content of the anode active material based on the total weight of the anode mixture or anode active material layer 120 may be in a range from 90 wt% to 99 wt%.

The term "carbon-based active material" used herein may refer to an active material that contains carbon and does not contain silicon.

In term "silicon-based active material" used herein may refer to an active material containing silicon. For example, the silicon-based active material may include a silicon-carbon composite (Si/C).

In example embodiments, the anode active material may include a carbon-based active material. The carbon-based active material may include at least one of artificial graphite and natural graphite.

In example embodiments, a content of the carbon-based active material based on the total weight of the anode mixture or the anode active material layer 120 may be greater than 50 wt%, 60 wt% or more, 65 wt% or more, 70 wt% or more, 75 wt% or more, or 80 wt% or more.

For example, the content of the carbon-based active material based on the total weight of the anode mixture or the anode active material layer 120 may be greater than 50 wt% and less than 99 wt%, in a range from 60 wt% to 98.5 wt%, from 70 wt% to 98.2 wt%, or from 80 wt% to 98 wt%.

An excessive amount of the carbon-based active material may be included in the anode mixture, so that stable capacity properties may be provided from the anode 130, and excessive expansion/contraction of the anode 130 may be prevented during repeated charge/discharge.

Artificial graphite of the the carbon-based active materials has relatively stable capacity properties, and may provide improved chemical stability during repeated charge/discharge. Natural graphite of the carbon-based active materials may further increase a capacity value of the secondary battery.

In some embodiments, a content of artificial graphite based on the total weight of the anode mixture or anode active material layer 120 may be greater than 50 wt%, 52 wt% or more, 54 wt% or more, 55 wt% or more, 56 wt% or more, 57 wt% or more, 58 wt% or more, 59 wt% or more, or 59.5 wt% or more.

For example, the content of artificial graphite based on the total weight of the anode mixture or anode active material layer 120 may be greater than 50 wt% and less than 99 wt%, from 52 wt% to 98.5 wt%, from 55 wt% to 98.2 wt%, or from 59 wt% to 98 wt%.

In some embodiments, a content of natural graphite based on the total weight of the anode mixture or anode active material layer 120 may be less than 10 wt%, 10 wt% or less, 7 wt% or less, or from 1 wt% to 5 wt%.

In example embodiments, the anode active material may further include a silicon-based active material.

The silicon-based active material may include Si, SiOx (0<x<2), a silicon-carbon composite (Si/C), a silicon oxide-carbon composite (SiO/C), a silicon metal (Si-Metal), a silicate-carbon composite or the like.

The silicon-based active material may include a lithium-silicate compound. For example, the silicon-based active material may include a lithium-silicate compound containing a dopant such as magnesium, aluminum, or the like.

In some embodiments, the silicon-based active material may include the silicon-carbon composite. The silicon-carbon composite may include a carbon core and a silicon coating formed on the carbon core.

For example, the carbon core may have a porous structure, and the silicon coating may be formed on the porous carbon structure through a deposition process such as a chemical vapor deposition (CVD).

In example embodiments, a content of the silicon-based active material may be less than a content of the carbon-based active material.

Less than half the total weight of the anode active material 120 or the anode mixture may be included in the silicon-based active material. Accordingly, the capacity properties of the secondary battery may be improved while suppressing the reduction in the life-span of the anode due to a volume expansion.

In example embodiments, the content of the silicon-based active material based on the total weight of the anode mixture or the anode active material layer 120 may be less than 50 wt%, 48 wt% or less, 46 wt% or less, 45 wt% or less, 43 wt% or less, 42 wt% or less, 41 wt% or less, or 40.5 wt% or less.

In some embodiments, the anode active material may include the carbon-based active material and the silicon-based active material, as described above.

In an embodiment, a weight ratio of the silicon-based active material to the carbon-based active material may be 0.1 or more, 0.11 or more, 0.12 or more, 0.13 or more, or 0.14 or more.

In some embodiments, a weight ratio of the silicon-based active material to the carbon-based active material may be 1.0 or less, 0.9 or less, 0.8 or less, 0.75 or less, or 0.7 or less.

For example, the weight ratio of the silicon-based active material to the carbon-based active material may be in a range from 0.1 to 1.0, from 0.11 to 0.9, from 0.13 to 0.75, or from 0.14 to 0.7.

In the above range, nitrate may bind to surfaces of the carbon-based active material and the silicon-based active material to increase bonding strength between the active materials.

In a comparative example, the anode active material may include a lithium-based active material. A coating on the lithium-based active material by the nitrate may not be stably maintained within the anode. Accordingly, suppression of a binder migration may not be substantially implemented.

According to embodiments of the present disclosure, the anode active material layer 120 includes a nitrate.

The nitrate may refer to a compound containing a nitrate ions (NO₃⁻). For example, the nitrate may include copper nitrate (Cu(NO₃)₂), gold nitrate (Au(NO₃)₃), sodium nitrate (NaNO₃), magnesium nitrate (Mg(NO₃)₂), lead nitrate (Pb(NO₃)₂), barium nitrate (Ba(NO₃)₂), ammonium nitrate (NH₄NO₃), silver nitrate (AgNO₃), iron nitrate (Fe(NO₃)₃), potassium nitrate (KNO₃), calcium nitrate (Ca(NO₃)₂), rubidium nitrate (RbNO₃), lithium nitrate (LiNO₃), or the like. These may be used alone or in a combination of two or more therefrom.

In example embodiments, the nitrate may include an alkali metal nitrate. For example, the nitrate may include one or more of lithium nitrate, sodium nitrate, potassium nitrate and rubidium nitrate.

The alkali metal nitrate may be bonded to the surface of the anode active material to evenly distribute the binder between the anode active materials. Accordingly, a binder concentration deviation throughout the anode may be reduced.

In example embodiments, the nitrate may be bonded to the anode active material. For example, the nitrate may be coated on an exterior and/or the surface of the anode active material.

The nitrate bonded to the anode active material may increase the bonding strength between the anode active materials and reduce the binder migration during a drying process.

In example embodiments, a content of the nitrate may be 0.03 wt% or more based on the total weight of the anode active material and the nitrate. In some embodiments, the content of the nitrate may be 0.035 wt% or more, 0.04 wt% or more, 0.045 wt% or more, 0.048 wt% or more, or 0.05 wt% or more, based on the total weight of the anode active material and the nitrate.

In example embodiments, the content of the nitrate may be 5.0 wt% or less, based on the total weight of the anode active material and the nitrate.

In some embodiments, the content of the nitrate may be 4.5 wt% or less, 4.2 wt% or less, 4.1 wt% or less, 4.0 wt% or less, 3.8 wt% or less, 3.5 wt% or less, 3.2 wt% or less, 3.0 wt% or less, 2.8 wt% or less, 2.6 wt% or less, or 2.5 wt% or less, based on the total weight of the anode active material and the nitrate.

For example, the content of the nitrate may be in a range from 0.03 wt% to 5.0 wt%, from 0.035 wt% to 4.5 wt%, from 0.04 wt% to 4.0 wt%, from 0.045 wt% to 3.5 wt%, or from 0.05 wt% to 2.5 wt% based on the total weight of the anode active material and the nitrate.

In the above content range, a distance between the anode active materials in the anode mixture or the anode slurry may be controlled, so that the binder may be evenly distributed between the anode active materials. Thus, decrease in bonding strength due to volume expansion and contraction of the anode active materials may be suppressed.

In example embodiments, the anode active material may include a nitrate-anode active material composite.

For example, the nitrate-anode active material composite may include a carbon-based active material core and a nitrate coating formed on the carbon-based active material core. In example embodiments, an average particle diameter of the anode active material may be in a range from 1 µm to 50 µm.

In example embodiments, an average particle diameter of the nitrate-anode active material composite may be in a range from 1 µm to 100 µm. The average particle size of the nitrate-anode active material composite may be adjusted depending on a composition, a content, etc., of the nitrate.

For example, the anode active material may include a secondary particle formed by agglomeration of primary particles having an average particle diameter of 1 µm to 15 µm. For example, the anode active material may include a secondary particle formed by agglomeration of primary particles of the nitrate-anode active material composite having an average particle diameter of 1 µm to 20 µm.

As used herein, the term "average particle diameter" may refer to "D50," and "average particle diameter (D50)" may refer to a particle diameter at which a volume cumulative percentage in a particle size distribution based on a particle volume corresponds to 50%. For example, the average particle diameter may be measured through a laser diffraction analysis using a laser particle size analyzer.

The anode active material may be mixed with the nitrate.

For example, the anode active material may include the carbon-based active material and/or the silicon-based active material according to the embodiments described above. For example, the anode active material and the nitrate may be mixed with an aqueous solvent to obtain a mixture having a slurry form, and the aqueous solvent may be vacuum-dried.

The aqueous solvent may include water, distilled water, pure water, ultrapure water, etc.

In example embodiments, the aqueous solvent may be used in an amount from 20 parts by weight to 60 parts by weight, from 25 parts by weight to 55 parts by weight, or from 30 parts by weight to 50 parts by weight, based on 100 parts by weight of the anode active material.

The vacuum drying may improve distribution of the nitrate, so that the anode may be manufactured while suppressing the binder migration.

In some embodiments, the mixture of the anode active material and the nitrate may be vacuum-dried at room temperature.

For example, if the anode active material is dried or heat treated at a high temperature (e.g., 400°C or higher), the nitrate may be removed in a gaseous form, and the anode active material layer 120 may not contain nitrate.

For example, if the anode active material is dried at an atmospheric pressure, fluidity of the nitrate may be reduced, and sufficient distribution of the nitrate between the active materials may not be implemented.

According to embodiments, the anode active material layer 120 includes a binder.

The binder may include polyvinylidene fluoride (PVDF), vinylidene fluoride-hexafluoropropylene copolymer, polyacrylonitrile, polymethylmethacrylate, acrylonitrile butadiene rubber (NBR), polybutadiene rubber (BR), styrene-butadiene rubber (SBR), a polyacrylic acid-based binder, a poly(3,4-ethylenedioxythiophene) (PEDOT)-based binder, carboxymethyl cellulose (CMC), hydroxypropyl cellulose, or the like. These may be used alone or in a combination of two or more therefrom.

In some embodiments, the binder may include a rubber-based binder.

The rubber-based binder may include acrylonitrile butadiene rubber (NBR), polybutadiene rubber (BR), styrene-butadiene rubber (SBR), isoprene rubber, butyl acrylate rubber, or the like.

In some embodiments, the binder may further include a cellulose-based binder.

The cellulose-based binder may include carboxymethyl cellulose (CMC), hydroxypropyl cellulose, or the like.

In an embodiment, SBR may be used as the rubber-based binder, and CMC may be used as the cellulose-based binder.

A content of the binder based on the total weight of the anode mixture or the anode active material layer 120 may be 4 wt% or less. In some embodiments, the content of the binder may be in a range from 1 wt% to 4 wt%, from 1.5 wt% to 3.5 wt%, or from 2.0 wt% to 3.0 wt%. The content of the binder may represent a total content of the rubber-based binder and the cellulose-based binder.

In example embodiments, a content of the rubber-based binder may be less than 5 wt% based on the total weight of the anode active material layer 120.

In some embodiments, the content of the rubber-based binder may be less than 5 wt%, 4.5 wt% or less, 4.3 wt% or less, 4.2 wt% or less, 4.0 wt% or less, 3.8 wt% or less, 3.6 wt% or less, or 3.5 wt% or less based on the total weight of the anode mixture or the anode active material layer 120. In some embodiments, the content of the rubber-based binder may be 0.1 wt% or more, 0.2 wt% or more, 0.3 wt% or more, 0.4 wt% or more, 0.5 wt% or more, 0.6 wt% or more, 0.7 wt% or more, or 0.8 wt% or more based on the total weight of the anode mixture or the anode active material layer 120.

For example, the content of the rubber-based binder may be 0.1 wt% or more and less than 5 wt%, from 0.1 wt% to 4.5 wt%, from 0.2 wt% to 4.0 wt%, from 0.3 wt% to 3.8 wt%, or from 0.5 wt% to 3.5 wt% based on the total weight of the anode mixture or the anode active material layer 120.

In the above content range, the binder may be evenly distributed in the anode active material layer 120.

In example embodiments, the anode active material layer 120 may further include the conductive material.

The conductive material may be added to enhance conductivity and/or mobility of lithium ions or electrons. For example, non-limiting examples of the conductive material may include a carbon-based conductive material such as graphite, carbon black, acetylene black, Ketjen black, graphene, carbon nanotube, a vapor-grown carbon fiber (VGCF), a carbon fiber, etc., and/or a metal-based conductive materials including tin, tin oxide, titanium oxide, a perovskite material such as LaSrCoO₃, LaSrMnO₃, etc.

A content of the conductive material based on the total weight of the anode mixture or anode active material layer 120 may be in a range from 0.1 wt% to 5 wt%. In some embodiments, the content of the conductive material may be in a range from 0.1 wt% to 3 wt%, or from 0.1 wt% to 2 wt%.

According to embodiments of the present disclosure, a binder concentration gradient in the anode active material layer 120 is 0.1 wt%/µm or less.

The binder concentration gradient is expressed as an absolute value.

The binder concentration gradient is measured through an SEM-EDS (scanning electron microscope-energy dispersive spectroscopy) analysis.

Specifically, a dye solution (e.g., an aqueous solution of osmium tetroxide (OsO₄)) at a concentration of 0.1 wt% to 5 wt% may be adsorbed to the binder of the anode active material layer via a vapor adsorption. Thereafter, the concentration gradient of the binder is calculated from a content of the dye adsorbed to the binder measured by the SEM-EDS and a thickness of the anode active material layer.

In example embodiments, the concentration gradient of the binder can be calculated from the content of the dye adsorbed to the binder and the thickness of the anode active material layer 120 which are measured at multiple points along a line in a thickness direction in a cross-section of the anode active material layer 120.

For example, the concentration gradient of the binder can be calculated from the contents of the dye adsorbed to the binder and the thickness of the anode active material layer 120 which are measured at all points along a straight line in the thickness direction in the cross-section of the anode active material layer 120.

For example, the concentration gradient of the binder can be calculated from the contents of the dye adsorbed to the binder which are measured at 50 to 200 points spaced equally along the straight line in the thickness direction in the cross-section of the anode active material layer 120, and the thickness of the anode active material layer 120

The "thickness direction" may refer to a direction from a top surface of the anode current collector 125 to a top surface of the anode active material layer 120. The thickness direction may refer to a direction perpendicular to a surface where the anode current collector 125 and the anode active material layer 120 contact each other.

For example, the dye included in the cross-section of the anode active material layer 120 cut in the thickness direction can be confirmed through an EDS mapping of the SEM-EDS analysis. For example, the distribution and content of the dye adsorbed to the binder along the thickness direction line in the cross-section of the anode active material layer 120 can be confirmed through the SEM-EDS analysis.

In example embodiments, the distribution of the binder included in the anode active material layer 120 may be confirmed through the content and distribution of the dye adsorbed to the binder. For example, the distribution and content of the dye adsorbed to the binder measured through the SEM-EDS analysis in the cross-section of the anode active material layer 120 can be confirmed through the distribution and content of the dye adsorbed to the binder.

The content of the binder included in the anode active material layer 120 and the content of the dye may not be identical. For example, the content of the binder may be proportional to the content of the dye, but may not be identical.

The binder may include the rubber-based binder. In some embodiments, the binder may include a butadiene rubber-based binder. The butadiene rubber-based binder may be dyed using the dye, so that the distribution can be confirmed by the SEM-EDS analysis.

For example, an aqueous solution containing the dye may be prepared, and the dye may be adsorbed from the aqueous solution to the anode current collector 125 and/or the anode active material layer 120. During the dye adsorption, the anode active material layer 120 may be in a cut state, but can be sufficiently dyed even in a state of not being cut.

The dye may include osmium tetroxide (OsO₄), but is not limited thereto. For example, the dye may include ruthenium tetroxide (RuO₄).

For example, carbon double bonds of the butadiene rubber binder may be substituted with osmium. The binder can be distinguished by a color contrast, e.g., , due to the substituted osmium through the EDS analysis

The binder concentration gradient may be calculated using a linear regression analysis. For example, the binder concentration gradient may include a gradient in a direction from the anode current collector 125 to the anode active material layer 120 by the linear regression analysis.

For example, a linear regression model may be generated using a least squares method, and the binder concentration gradient may be calculated using a program based on the linear regression model. For example, the content of the dye adsorbed to the binder may be measured at equally spaced 50 to 200 points arranged along a straight line in the thickness direction in the cross-section of the anode active material layer 120. The concentration gradient of the binder may be calculated using the linear regression model of Origin program using the content values of the dye adsorbed to the binder.

In some embodiments, the concentration gradient of the binder can be calculated according to Equation 1 below.

$binder concentration gradient = ΔA / B$

In Equation 1, A represents the content of the dye adsorbed to the binder measured by the SEM-EDS analysis, and B represents the thickness of the anode active material layer 120.

For example, ΔA/B can be calculated from the contents of the dye adsorbed to the binder measured at multiple points along the line in the thickness direction in the cross-section of the anode active material layer 120 and the thickness of the anode active material layer 120.

The binder concentration gradient may be expressed in a unit of wt%/µm, and the binder concentration gradient can be expressed with the unit omitted below.

The calculation according to Equation 1 may include calculations based on the linear regression analysis. For example, ΔA/B in Equation 1 may represent a change in the content of the dye adsorbed to the binder depending on the thickness change of the anode active material layer 120. For example, ΔA/B in Equation 1 may be calculated based on the linear regression analysis from the contents of the dye adsorbed to the binder at multiple points and the thickness change of the anode active material layer.

In example embodiments, the thickness of the anode active material layer 120 may be in a range from 50 µm to 300 µm.

In some embodiments, the thickness of the anode active material layer 120 may be in a range from 60 µm to 280 µm, from 70 µm to 270 µm, from 90 µm to 260 µm, from 100 µm to 250 µm, from 120 µm to 240 µm, or from 140 µm to 230 µm.

In the above thickness range, the anode having a controlled concentration gradient of the binder in the anode active material layer 120 may be easily implemented. Accordingly, the binder migration may be reduced, and electrical and life-span properties of the secondary battery may be improved.

In some embodiments, the concentration gradient of the binder may be 0.095 wt%/µm or less, 0.090 wt%/µm or less, 0.085 wt%/µm or less, 0.082 wt%/µm or less, 0.080 wt%/µm or less, 0.079 wt%/µm or less, 0.078 wt%/µm or less, 0.077 wt%/µm or less, 0.076 wt%/µm or less, or 0.075 wt%/µm or less.

In some embodiments, the concentration gradient of the binder may be 0.01 wt%/µm or more, 0.03 wt%/µm or more, 0.05 wt%/µm or more, 0.07 wt%/µm or more, 0.10 wt%/µm or more, 0.12 wt%/µm or more, 0.15 wt%/µm or more, 0.17 wt%/µm or more, 0.20 wt%/µm or more, 0.22 wt%/µm or more, 0.24 wt%/µm or more, 0.25 wt%/µm or more, 0.27 wt%/µm or more, 0.28 wt%/µm or more, or 0.30 wt%/µm or more.

For example, the concentration gradient of the binder may be in a range from 0.01 wt%/µm to 0.1 wt%/µm, from 0.01 wt%/µm to 0.09 wt%/µm, from 0.01 wt%/µm to 0.08 wt%/µm, from 0.05 wt%/µm to 0.08 wt%/µm, from 0.10 wt%/µm to 0.078 wt%/µm, from 0.15 wt%/µm to 0.078 wt%/µm, from 0.20 wt%/µm to 0.76 wt%/µm, from 0.25 wt%/µm to 0.075 wt%/µm, or from 0.30 wt%/µm to 0.075 wt%/µm.

In the above range, the binder migration may be further suppressed.

If the binder concentration gradient exceeds the upper limits of the above-described range, a resistance of the anode 130 may increase due to the binder migration, and the bonding strength between the active materials in the anode active material layer 120 may decrease. Accordingly, electrical and life-span properties of the secondary battery may be deteriorated.

For example, if the binder concentration gradient decreases excessively, the bonding strength of the anode active material layer 120 may decrease.

A deviation between peak and valley points of the dye content adsorbed to the binder in the anode active material layer 120 having the above-described binder concentration gradient may be reduced.

The peak and valley points of the dye content adsorbed to the binder can be measured from the SEM-EDS analysis. Among the peak and valley points of the content of the dye adsorbed to the binder, values included in a thickness of 5% of the anode active material layer 120 from the contact surface between the anode current collector 125 and the anode active material layer 120 may be excluded.

In example embodiments, an adhesive force of the anode active material layer 120 to the anode current collector 125 may be 0.15 N/cm or more.

In some embodiments, the adhesive force of the anode active material layer 120 to the anode current collector 125 may be 0.16 N/cm or more, 0.17 N/cm or more, 0.18 N/cm or more, 0.19 N/cm or more, or 0.2 N/cm or more.

An upper limit of the adhesive force is not particularly limited, but the adhesive force of the anode active material layer 120 to the anode current collector 125 may be, e.g., 0.5 N/cm or less, 0.45 N/cm or less, or 0.4 N/cm or less.

The anode active material layer 120 may have the adhesive force within the above range, so that detachment of anode active materials from the anode 130 may be suppressed, thereby improving the life-span properties of the secondary battery.

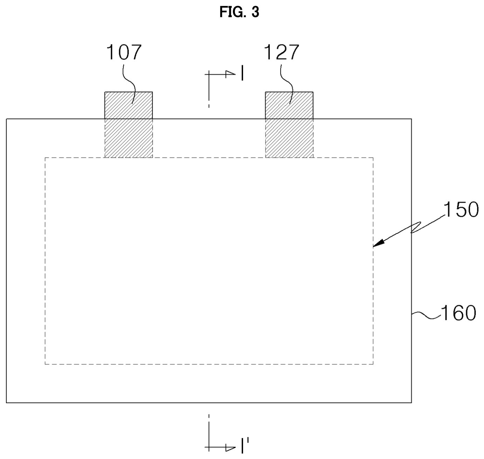

FIG. 2 and FIG. 3 are a schematic cross-sectional view and a schematic plan view of a lithium secondary battery, respectively, according to embodiments. For example, FIG. 2 is a cross-sectional view taken along a line I-I' of FIG. 3.

The structure of the secondary battery illustrated in FIGS, 2 and 3 is schematically illustrated for convenience of descriptions, and the shape, stacking structure, and the number of stacked electrodes are not limited to those illustrated in FIGS. 2 and 3.

Referring to FIGS. 2 and 3, a lithium secondary battery may include an electrode assembly 150 including a cathode 100 and the anode 130. In some embodiments, the electrode assembly may further include a separator 140 interposed between the cathode and the anode. The electrode assembly 150 may be contained in a case 160, and impregnated with an electrolyte solution.

The cathode 100 may include a cathode active material layer 110 formed by coating a cathode active material on a cathode current collector 105. For example, a cathode mixture may be prepared by mixing and stirring the cathode active material with a binder, a conductive material, and/or a dispersant in a solvent. The cathode mixture may be coated on the cathode current collector 105, and then dried and pressed to form the cathode active material layer 110.

The cathode current collector 105 may include, e.g., stainless steel, nickel, aluminum, titanium, copper, or an alloy thereof. For example, the cathode current collector 105 may include aluminum or an aluminum alloy.

The cathode active material layer 110 may include a cathode active material. The cathode active material may include a compound capable of reversibly intercalating and de-intercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or crystal structure represented by Chemical Formula 1 below.

[Chemical Formula 1] LiₓNiₐM_{b}O_{2+z}

In Chemical Formula 1, 0.9≤x≤1.2, 0.6≤a≤0.99, 0.01≤b≤0.4, and -0.5≤z≤0.1 may be satisfied. As described above, M may include Co, Mn and/or Al.

The chemical structure represented by Chemical Formula 1 represents a bonding relationship in the layered structure or crystal structure of the cathode active material, and does not exclude an additional element. For example, M may include Co and/or Mn, and Co and/or Mn may serve as main active elements of the cathode active material together with Ni. Chemical Formula 1 is provided to express the bonding relationship of the main active elements, and is to be understood as encompassing introduction and substitution of the additional element.

In an embodiment, an auxiliary element may be further included to enhance chemical stability of the cathode active material or the layered structure/crystal structure in addition to the main active elements. The auxiliary element may be incorporated into the layered/crystal structure to form a bond, and this case is to be understood as being included in the range of Chemical Formula 1.

The auxiliary element may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may also function as an auxiliary active element such as Al together with Co or Mn which may contributing to capacity/power activities of the cathode active material.

For example, the cathode active material or the lithium-nickel metal oxide may include a layered structure or crystal structure represented by Chemical Formula 1-1:

[Chemical Formula 1-1] LiₓNiₐM1_{b1}M2_{b2}O_{2+z}

In Chemical Formula 1-1, M1 may include Co, Mn and/or Al. M2 may include the aforementioned auxiliary element. In Chemical Formula 1-1, 0.9≤x≤1.2, 0.6≤a≤0.99, 0.01≤b1+b2≤0.4, and -0.5≤z≤0.1.

The cathode active material may further include a coating element or doping element. For example, elements substantially identical to or similar to the above-described auxiliary elements may be used as the coating element or doping element. For example, the above-described elements may be used alone or in a combination thereof as the coating element or the doping element.

The coating element or the doping element may be present on a surface of the lithium-nickel metal oxide particle, or may penetrate through the surface of the lithium-nickel metal oxide particle to be incorporated into the bonding structure represented by Chemical Formula 1 or Chemical Formula 1-1.

The cathode active material may include a nickel-cobalt-manganese (NCM)-based lithium oxide. In this case, an NCM-based lithium oxide having increased nickel content may be used.

Ni can serve as a transition metal associated with the power and the capacity of the lithium secondary battery. Thus, a high-Ni composition may be employed in the cathode active material as described above, so that a high-capacity cathode and a high-capacity lithium secondary battery may be provided.

However, as the Ni content increases, the long-term storage stability and life-span stability of the cathode or secondary battery may be relatively reduced, and side reactions with an electrolyte solution may also be increase. However, according to example embodiments, Co may be included to maintain electrical conductivity, and Mn may be included to improve life-span stability and capacity retention properties.

A content of Ni (e.g., a mole fraction of nickel among total moles of nickel, cobalt and manganese) in the NCM-based lithium oxide may be 0.6 or greater, 0.7 or greater, or 0.8 or greater. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, e.g., a Mn-rich active material, a Li-rich layered oxide (LLO)/over-lithiated oxide (OLO) active material or a Co-less active material having a chemical structure or a crystal structure represented by Chemical Formula 2.

[Chemical Formula 2] p[Li₂MnO₃]·(1-p)[Li_{q}JO₂]

In Chemical Formula 2, 0<p<1, 0.9≤q≤1.2, and J may include at least one element selected from Mn, Ni, Co, Fe, Cr, V, Cu, Zn, Ti, Al, Mg and B.

For example, a cathode slurry may be prepared by mixing the cathode active material in a solvent. The cathode slurry may be coated on a cathode current collector 105, and then dried and pressed to prepare a cathode active material layer 110.

The cathode active material layer 110 may further include a binder, and may optionally further include a conductive material, a thickener, etc.

The cathode binder and the conductive material may include materials substantially the same as or similar to the above-described binder/conductive material. In some embodiments, a PVDF-based binder may be used as the cathode binder.

The separator 140 may include a porous polymer film or a porous nonwoven fabric. The porous polymer film may include a polyolefin-based polymer such as an ethylene polymer, a propylene polymer, an ethylene/butene copolymer, an ethylene/hexene copolymer, an ethylene/methacrylate copolymer, or the like. The porous nonwoven fabric may include a glass fiber having a high-melting-point, a polyethylene terephthalate fiber, or the like. The separator 140 may also include a ceramic material. For example, inorganic particles may be coated on the polymer film or dispersed within the polymer film to enhance heat resistance.

In example embodiments, an electrode cell may be defined by the cathode 100, the anode 130 and the separator 140, and multiple electrode cells may be stacked to form, e.g., the electrode assembly 150. The electrode assembly 150 may have a structure of a winding type, a stacking type, a z-folding type, or a stack-folding type.

The electrode assembly 150 may be housed in a case 160 together with an electrolyte solution to define a lithium secondary battery. In example embodiments, a non-aqueous electrolyte solution may be used as the electrolyte solution.

The non-aqueous electrolyte solution may contain a lithium salt as an electrolyte and an organic solvent, and the lithium salt may be expressed as, e.g., Li⁺X⁻. Examples of the anion (X⁻) of the lithium salt include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like.

Examples of the organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethylsulfoxide, acetonitrile, dimethoxyethane, diethoxyethane, vinylene carbonate, sulfolane, gamma-butyrolactone, propylene sulfite, tetrahydrofuran, or the like. These solvents may be used alone or in a combination of two or more therefrom.

In some embodiments, a solid electrolyte may be used instead of the above-described non-aqueous electrolyte solution. In this case, the lithium secondary battery may be manufactured in the form of an all-solid-state battery. Further, a solid electrolyte layer may be disposed between the cathode and the anode instead of the aforementioned separator.

The solid electrolyte may include a sulfide-based electrolyte. In a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q}, (p and q are positive numbers, M is P, Si, Ge, B, Al, Ga or In), Li₇-ₓPS₆-ₓClₓ (0≤x≤2), Li₇₋ₓPS₆₋ₓBrₓ (0≤x≤2), Li₇₋ₓPS₆₋ₓIₓ (0≤x≤2), or the like. These may be used alone or in a combination of two or more therefrom.

In an embodiment, the solid electrolyte may include an oxide-based amorphous solid electrolyte such as Li₂O-B₂O₃-P₂O₅, Li₂O-SiO₂, Li₂O-B₂O₃, Li₂O-B₂O₃-ZnO, or the like.

As illustrated in FIG. 3, electrode tabs (a cathode tab and an anode tab) may protrude from the cathode collector 105 and the anode collector 125 included in each electrode cell, and may extend to one side of the case 160. The electrode tabs may be fused to the one side of the case 160 and connected to electrode leads (a cathode lead 107 and an anode lead 127) that may extend or be exposed to an outside of the case 160.

In FIG. 3, the cathode lead 107 and the anode lead 127 are illustrated as protruding from an upper side of the case 160 in a plan view. However, positions of the electrode leads are not limited thereto. For example, the electrode leads may protrude from at least one of both lateral sides of the case 160, or may protrude from a lower side of the case 160. Alternatively, the cathode lead 107 and the anode lead 127 may be formed to protrude from different sides of the case 160.

The lithium secondary battery may be manufactured, e.g., in a cylindrical type using a can, a prismatic type, a pouch type, or a coin type.

The present disclosure includes the following numbered aspects:
Aspect 1: An anode for a lithium secondary battery, including: an anode current collector; and an anode active material layer formed on the anode current collector, the anode active material layer including an anode active material, a binder and a nitrate, wherein a concentration gradient of the binder in a thickness direction from a top surface of the anode current collector to a top surface of the anode active material layer is 0.1 wt%/µm or less, and the concentration gradient of the binder is calculated from contents of a dye adsorbed to the binder measured at multiple points along a line in the thickness direction on a cross-section of the anode active material layer through an SEM-EDS (scanning electron microscope-energy dispersive spectroscopy) analysis and a thickness of the anode active material layer.
Aspect 2: The anode for a lithium secondary battery of aspect 1, wherein the concentration gradient of the binder is calculated by a linear regression analysis from the contents of the dye adsorbed to the binder and the thickness of the anode active material layer.
Aspect 3: The anode for a lithium secondary battery of any one of aspects 1 and 2, wherein the concentration gradient of the binder is in a range from 0.01 wt%/µm to 0.08 wt%/µm.
Aspect 4: The anode for a lithium secondary battery of any one of aspects 1 to 3, wherein the nitrate is bonded to a surface of the anode active material.
Aspect 5: The anode for a lithium secondary battery of any one of claims 1 to 4, wherein a content of the nitrate is in a range from 0.03 wt% to 5.0 wt% based on a total weight of the anode active material and the nitrate.
Aspect 6: The anode for a lithium secondary battery of any one of aspects 1 to 5, wherein the nitrate includes an alkali metal nitrate.
Aspect 7: The anode for a lithium secondary battery of any one of aspects 1 to 6, wherein the anode active material includes at least one selected from the group consisting of a carbon-based active material and a silicon-based active material.
Aspect 8: The anode for a lithium secondary battery of any one of aspects 1 to 7, wherein the anode active material includes a carbon-based active material and a silicon-based active material, and a weight ratio of the silicon-based active material to the carbon-based active material is in a range from 0.1 to 1.0.
Aspect 9: The anode for a lithium secondary battery of any one of aspects 1 to 8, wherein the binder includes a rubber-based binder.
Aspect 10: The anode for a lithium secondary battery of aspect 9, wherein a content of the rubber-based binder is less than 5 wt% based on a total weight of the anode active material layer.
Aspect 11: The anode for a lithium secondary battery of any one of aspects 1 to 10, wherein the thickness of the anode active material layer is in a range from 50 µm to 300 µm.
Aspect 12: The anode for a lithium secondary battery of any one of aspects 1 to 11, wherein an adhesion force of the anode active material layer to the anode current collector is at least 0.15 N/cm.
Aspect 13: A lithium secondary battery, including: the anode for a lithium secondary battery of any one of aspects 1 to 12; and a cathode opposing the anode.

### Example 1

### (1) Preparation of nitrate-anode active material composite

69.95 wt% of artificial graphite as an anode active material, 0.05 wt% of lithium nitrate (LiNO₃) as a nitrate, and 30 wt% of distilled water were placed in a mixer. The mixture was stirred at a stirring speed of 20 Hz for 2 hours, and then dried under vacuum for 12 hours to prepare a nitrate-anode active material composite.

### (2) Fabrication of anode

97.3 wt% of the nitrate-anode active material composite, 1.2 wt% styrene-butadiene rubber (SBR) as a first binder and 1.5 wt% carboxymethyl cellulose (CMC) as a second binder were added to water to prepare an anode slurry. The anode slurry was applied to top and bottom surfaces of an anode current collector (Cu foil) to a thickness of 200 µm, and then dried and pressed to form an anode active material layer, thereby obtaining an anode.

### (3) Measurement of binder concentration and slope in anode

Osmium tetroxide (OsO₄) was dissolved in distilled water to a concentration of 1 wt%. Osmium was adsorbed to the anode using a vapor adsorption. The osmium-adsorbed anode was cut, and a binder content was determined from a osmium content determined by SEM (Scanning Electron Microscope)-EDS (Energy Dispersive Spectroscopy) analysis of the cut surface.

An osmium content and a thickness of the anode active material layer were set as variables, and a slope in a direction from the anode current collector toward the anode active material layer was calculated a using linear regression analysis.

When determining peak and valley points of the osmium content, the osmium content in a 5% thickness of the anode active material layer from a contact surface with the anode current collector was excluded.

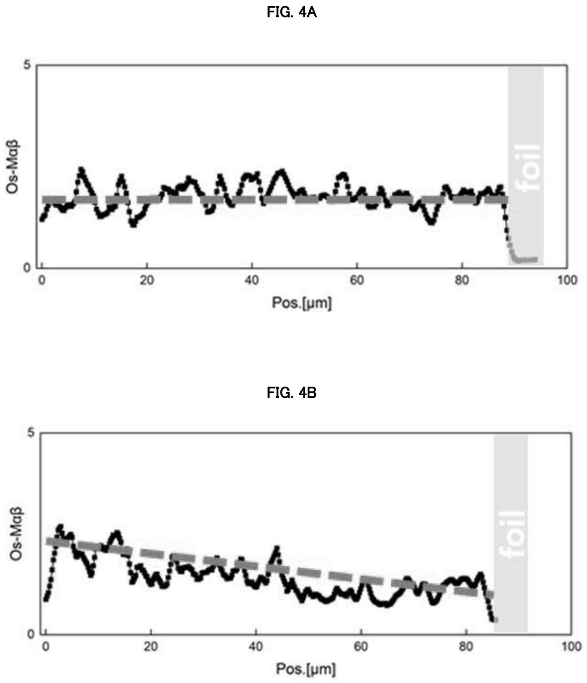

FIG. 4A is a graph of an anode for a lithium secondary battery according to Example 1 analyzed by an SEM-EDS. FIG. 4B is a graph of an anode for a lithium secondary battery according to Comparative Example 1 analyzed by an SEM-EDS.

As shown in FIGS. 4A and 4B, the content of osmium adsorbed on the cross-section of the anode formed a binder concentration gradient in a direction from the anode current collector toward the anode active material layer. In the anode according to Example 1, the binder concentration gradient was decreased. However, in the anode according to Comparative Example 1, the binder concentration gradient was increased.

### (4) Measurement of adhesion force in anode

Each anode of Examples and Comparative Examples was cut into a size of a width of 18 mm and a length of 150 mm, a 18 mm-width tape was attached to the anode current collector, and adhered using a roller loaded with a 2 kg load. The anode active material layer was adhered to one side of a tensile tester using a double-sided tape. The anode current collector with the tape attached was coupled to an opposite side of the tensile tester, and an adhesion force was measured.

### Examples 2 to 8

An anode was manufactured using the same method as that in Example 1, except that the content of lithium nitrate was changed according to Table 1 below.

### Examples 9 to 11

An anode was manufactured using the same method as that in Example 1, except that a nitrate according to Table 1 was used instead of lithium nitrate.

### Comparative Example 1

An anode was manufactured using the same method as that in Example 1, except that lithium nitrate was not included.

### Comparative Example 2

An anode was manufactured using the same method as that in Example 1, except that artificial graphite, lithium nitrate and distilled water were mixed and dried at 80°C and atmospheric pressure for 12 hours.

**[Table 1]**

| | content (wt%) | | | | binder concentration gradient (wt%/µm) | adhesion force (N) |
|---|---|---|---|---|---|---|
| | artificial graphite | nitrate | | distilled water | | |
| | | type | content | | | |
| Example 1 | 69.95 | LiNO₃ | 0.05 | 30.0 | 0.046 | 0.23 |
| Example 2 | 69.80 | LiNO₃ | 0.20 | 30.0 | 0.056 | 0.22 |
| Example 3 | 69.50 | LiNO₃ | 0.50 | 30.0 | 0.064 | 0.21 |
| Example 4 | 69.00 | LiNO₃ | 1.00 | 30.0 | 0.061 | 0.22 |
| Example 5 | 68.00 | LiNO₃ | 2.00 | 30.0 | 0.049 | 0.23 |
| Example 6 | 66.50 | LiNO₃ | 3.50 | 30.0 | 0.057 | 0.24 |
| Example 7 | 69.98 | LiNO₃ | 0.02 | 30.0 | 0.094 | 0.18 |
| Example 8 | 64.00 | LiNO₃ | 6.00 | 30.0 | 0.074 | 0.2 |
| Example 9 | 69.95 | KNO₃ | 0.05 | 30.0 | 0.048 | 0.23 |
| Example 10 | 69.95 | NaNO₃ | 0.05 | 30.0 | 0.065 | 0.21 |
| Example 11 | 69.95 | RbNO₃ | 0.05 | 30.0 | 0.074 | 0.21 |
| Comparative Example 1 | 70.00 | - | 0 | 30.0 | 0.127 | 0.19 |
| Comparative Example 2 | 69.95 | LiNO₃ | 0.05 | 30.0 | 0.114 | 0.17 |

### Examples 12 to 14

Anodes were manufactured using the same method as that in Example 1, except that an anode active material shown in Table 2 was used instead of artificial graphite.

### Comparative Examples 3 and 4

Anodes were manufactured using the same method as in Example 1, except that an preliminary anode active material shown in Table 2 was used instead of artificial graphite.

**[Table 2]**

| | content (wt%) | | | | binder concentration gradient (wt%/µm) | adhesion force (N) |
|---|---|---|---|---|---|---|
| | anode active material | | lithium nitrate | distilled water | | |
| | type | content | | | | |
| Example 1 | artificial graphite | 69.95 | 0.05 | 30.0 | 0.046 | 0.23 |
| Example 12 | artificial graphite | 41.95 | 0.05 | 30.0 | 0.057 | 0.31 |
| | SiOx (0<x<2) | 28.00 | | | | |
| Example 13 | artificial graphite | 49.95 | 0.05 | 30.0 | 0.049 | 0.29 |
| | SiOx (0<x<2) | 20.00 | | | | |
| Example 14 | artificial graphite | 59.95 | 0.05 | 30.0 | 0.051 | 0.25 |
| | SiOx (0<x<2) | 10.00 | | | | |
| Comparative Example 3 | SiOx (0<x<2) | 69.95 | 0.05 | 30.0 | 0.125 | 0.17 |
| Comparative Example 4 | Si | 69.95 | 0.05 | 30.0 | 0.119 | 0.18 |

### Examples 15 to 18

Anodes were manufactured using the same method as that in Example 1, except that the content of SBR was changed as shown in Table 3 below.

**[Table 3]**

| | content (wt%) (during the fabrication of anode) | | | binder concentration gradient (wt%/µm) | adhesion force (N) |
|---|---|---|---|---|---|
| | nitrate-anode active material composite | SBR | CMC | | |
| Example 1 | 97.3 | 1.2 | 1.5 | 0.046 | 0.23 |
| Example 15 | 98.0 | 0.5 | 1.5 | 0.041 | 0.18 |
| Example 16 | 97.5 | 1.0 | 1.5 | 0.052 | 0.21 |
| Example 17 | 95.5 | 3.0 | 1.5 | 0.058 | 0.19 |
| Example 18 | 94.5 | 4.0 | 1.5 | 0.078 | 0.28 |

### Experimental Example: Evaluation on secondary battery properties

A lithium secondary battery including the anode according to each of Examples and Comparative Examples and a lithium metal (Li metal) as a counter electrode (cathode) was manufactured. Specifically, a coin cell were manufactured using the anode and the cathode with a separator (polyethylene, thickness: 25 µm) interposed therebetween and impregnating by an 1 M LiPF₆ electrolyte solution dissolved in a mixed solvent of ethylene carbonate (EC)/ethyl methyl carbonate (EMC)/diethyl carbonate (DEC) (25/45/30; volume ratio).

### (1) Evaluation on capacity property

The lithium secondary battery according to each of Examples and Comparative Examples was charged (CC-CV 0.1C 0.01V 0.01C cut-off) in a 25°C chamber, a battery capacity (an initial charge capacity) was measured. Thereafter, the battery was discharged (CC 0.1C 1.5V cut-off) and a battery capacity (an initial discharge capacity) was measured.

### (2) Evaluation on rapid charge property

Each battery of Examples and Comparative Examples was charged (CC-CV 0.1C, 0.01V, 0.01C cut-off) and discharged (CC 0.1C, 1.5V cut-off).

The charge and discharge cycle was repeated 100 times, and a first discharge capacity (Q1) and a discharge capacity at the 100th cycle (Q100) were measured. A rapid charge capacity retention was calculated using an equation below.
$Rapid charging capacity retention \left(%\right) = Q 100 / Q 1 \times 100 \left(%\right)$

The evaluation results are shown in Table 4.

**[Table 4]**

| | initial charge capacity (mAh/g) | initial discharge capacity (mAh/g) | rapid charging capacity retention (100 cycles, %) |
|---|---|---|---|
| Example 1 | 94.1 | 344.0 | 71.5 |
| Example 2 | 93.9 | 343.8 | 71.8 |
| Example 3 | 94.2 | 344.1 | 70.7 |
| Example 4 | 94.5 | 343.7 | 70.4 |
| Example 5 | 93.8 | 343.8 | 70.3 |
| Example 6 | 94.0 | 343.6 | 68.9 |
| Example 7 | 93.9 | 344.2 | 65.1 |
| Example 8 | 92.8 | 343.7 | 63.9 |
| Example 9 | 93.7 | 343.9 | 70.6 |
| Example 10 | 94.1 | 344.3 | 71.1 |
| Example 11 | 94.0 | 344.5 | 71.9 |
| Example 12 | 82.4 | 715.2 | 48.2 |
| Example 13 | 84.2 | 612.7 | 51.4 |
| Example 14 | 87.2 | 482.5 | 55.8 |
| Example 15 | 94.4 | 344.2 | 67.9 |
| Example 16 | 94.2 | 343.9 | 72.1 |
| Example 17 | 93.1 | 344.1 | 62.5 |
| Example 18 | 92.8 | 343.8 | 57.8 |
| Comparative Example 1 | 94.4 | 343.6 | 65.7 |
| Comparative Example 2 | 94.0 | 344.5 | 66.4 |
| Comparative Example 3 | 75.6 | 1618.2 | - |
| Comparative Example 4 | 62.1 | 3214.0 | - |

Referring to Table 4, the rapid charge capacity retention was improved in Examples including the anode with a binder concentration gradient of 0.1 wt%/µm or less.

The rapid charge capacity retention was reduced in the secondary batteries including the anodes according to Comparative Examples.

Referring to Examples 12 to 14 and Comparative Examples 3 and 4 including silicon-based active materials, the rapid charging capacity retention of the secondary batteries including the anodes according to Examples 12 to 14 was improved.

The rapid charge capacity retention was significantly reduced before the 100th cycle in the secondary batteries including the anodes according to Comparative Examples 3 and 4.

## Claims

1. An anode for a lithium secondary battery, comprising:
an anode current collector; and
an anode active material layer formed on the anode current collector, the anode active material layer comprising an anode active material, a binder and a nitrate,
wherein a concentration gradient of the binder in a thickness direction from a top surface of the anode current collector to a top surface of the anode active material layer is 0.1 wt%/µm or less, and
the concentration gradient of the binder is calculated from contents of a dye adsorbed to the binder measured at multiple points along a line in the thickness direction on a cross-section of the anode active material layer through an SEM-EDS (scanning electron microscope-energy dispersive spectroscopy) analysis and a thickness of the anode active material layer.

2. The anode for a lithium secondary battery of claim 1, wherein the concentration gradient of the binder is calculated by a linear regression analysis from the contents of the dye adsorbed to the binder and the thickness of the anode active material layer.

3. The anode for a lithium secondary battery of any one of claims 1 and 2, wherein the concentration gradient of the binder is in a range from 0.01 wt%/µm to 0.08 wt%/µm.

4. The anode for a lithium secondary battery of any one of claims 1 to 3, wherein the nitrate is bonded to a surface of the anode active material.

5. The anode for a lithium secondary battery of any one of claims 1 to 4, wherein a content of the nitrate is in a range from 0.03 wt% to 5.0 wt% based on a total weight of the anode active material and the nitrate.

6. The anode for a lithium secondary battery of any one of claims 1 to 5, wherein the nitrate comprises an alkali metal nitrate.

7. The anode for a lithium secondary battery of any one of claims 1 to 6, wherein the anode active material comprises at least one selected from the group consisting of a carbon-based active material and a silicon-based active material.

8. The anode for a lithium secondary battery of any one of claims 1 to 7, wherein the anode active material comprises a carbon-based active material and a silicon-based active material, and a weight ratio of the silicon-based active material to the carbon-based active material is in a range from 0.1 to 1.0.

9. The anode for a lithium secondary battery of any one of claims 1 to 8, wherein the binder comprises a rubber-based binder.

10. The anode for a lithium secondary battery of claim 9, wherein a content of the rubber-based binder is less than 5 wt% based on a total weight of the anode active material layer.

11. The anode for a lithium secondary battery of any one of claims 1 to 10, wherein the thickness of the anode active material layer is in a range from 50 µm to 300 µm.

12. The anode for a lithium secondary battery of any one of claims 1 to 11, wherein an adhesion force of the anode active material layer to the anode current collector is at least 0.15 N/cm.

13. A lithium secondary battery, comprising:
the anode for a lithium secondary battery of any one of claims 1 to 12; and
a cathode opposing the anode.
